Europäisches Patentamt

European Patent Office

Office européen des brevets

(19)

(11) **EP 1 710 278 A1**

(12) **EUROPEAN PATENT APPLICATION**
published in accordance with Art. 158(3) EPC

(43) Date of publication:
**11.10.2006 Bulletin 2006/41**

(51) Int Cl.:
*C08L 101/00* (2006.01)    *B05D 5/06* (2006.01)
*C08F 265/02* (2006.01)    *G02B 5/02* (2006.01)

(21) Application number: 05709302.3

(22) Date of filing: **25.01.2005**

(86) International application number:
**PCT/JP2005/000901**

(87) International publication number:
**WO 2005/071014 (04.08.2005 Gazette 2005/31)**

(84) Designated Contracting States:
**DE FR GB IT NL**

(30) Priority: **26.01.2004 JP 2004016821**

(71) Applicant: **JSR Corporation
Tokyo 104-8410 (JP)**

(72) Inventors:
• **TAMORI, Kouji,
JSR CORPORATION
Chuo-ku, Tokyo 1048410 (JP)**

• **WATANABE, Yasuhisa,
JSR CORPORATION
Chuo-ku, Tokyo 1048410 (JP)**
• **NISHIKAWA, Akira,
JSR CORPORATION
Chuo-ku, Tokyo 1048410 (JP)**

(74) Representative: **TBK-Patent
Bavariaring 4-6
80336 München (DE)**

(54) **LIQUID COMPOSITION CONTAINING HOLLOW PARTICLE, PROCESS FOR PRODUCING THE SAME, AND OPTICAL ARTICLE**

(57)     A hollow particles-containing liquid composition which comprises:
(A) crosslinked hollow particles having particle diameters of 0.4 $\mu$m or more and containing 40 mass % or more of a toluene insoluble, in an amount of 5 to 70 mass %,
(B) a reactive diluent (B1) and/or an organic solvent (B2) in an amount of 95 to 30 mass % [the total mass of the crosslinked hollow particles (A) and the reactive diluent (B1) and/or the organic solvent (B2) is 100 mass %], and
(C) a dispersing agent in an amount of 0 to 30 parts by mass relative to 100 parts by mass of the total of the crosslinked hollow particles (A) and the reactive diluent (B1) and/or the organic solvent (B2). There are provided a hollow particles-containing liquid composition which is low in foreign matter content and can give a high haze, a process for production thereof, and an optical article.

EP 1 710 278 A1

**Description**

Technical Field

The present invention relates to a hollow particles-containing liquid composition, a process for production thereof, and an optical article. More particularly, the present invention relates to a hollow particles-containing liquid composition which is low in foreign matter content and can give a high haze, a process for production thereof, and an optical article.

Background Art

As light-scattering optical articles, there is, for example, a synthetic resin molded article which is a combination of inorganic hollow particles and an electron beam-setting resin (see, for example, Patent Literature 1). However, inorganic hollow particles are inferior in compatibility with organic resins, and there has been a problem that the particles tend to detach and drop off. As light-scattering optical articles using crosslinked hollow polymer particles superior in compatibility with organic resins, there is, for example, an optical article which contains crosslinked hollow polymer particles and has a surface unevenness having a pitch of 15 to 30 $\mu$m (see, for example, Patent Literature 2). The hollow particles disclosed in Patent Literature 2 have a certain degree of dispersibility; however, the foreign matter control for optical articles has become strict in recent years and there is required a light-scattering agent greatly superior in dispersibility. The JSR hollow particles disclosed in Patent Literature 2 were insufficient also in haze; therefore, it was necessary to newly form, on an optical article, a surface unevenness having a pitch of 15 to 30 $\mu$m, such as the one in Patent Literature 2.

Patent Literature 1: JP-A-1995-232131
Patent Literature 2: JP-A-1994-300905

Disclosure of the Invention

The present invention has been made in view of the above-mentioned problems and aims at providing a hollow particles-containing liquid composition which is low in foreign matter content and can give a high haze, a process for production thereof, and an optical article.
In order to achieve the above aim, the present invention provides below a hollow particles-containing liquid composition, a process for production thereof, and an optical article.
[1] A hollow particles-containing liquid composition which comprises:

(A) crosslinked hollow particles having particle diameters of 0.4 $\mu$m or more and containing 40 mass % or more of a toluene insoluble, in an amount of 5 to 70 mass %,
(B) a reactive diluent (B1) and/or an organic solvent (B2) in an amount of 95 to 30 mass % [the total mass of the crosslinked hollow particles (A) and the reactive diluent (B1) and/or the organic solvent (B2) is 100 mass %], and
(C) a dispersing agent in an amount of 0 to 30 parts by mass relative to 100 parts by mass of the total of the crosslinked hollow particles (A) and the reactive diluent (B1) and/or the organic solvent (B2).

[2] A hollow particles-containing liquid composition according to [1], which further comprises:

(D) a resin in an amount of 0.2 to 1,000 parts by mass relative to 100 parts by mass of the crosslinked hollow particles (A).

[3] A hollow particles-containing liquid composition according to [2], wherein the resin (D) is at least one kind selected from the group consisting of thermosetting resins, thermoplastic resins and photo-setting resins.

[4] A hollow particles-containing liquid composition according to any of [1] to [3,] wherein the crosslinked hollow particles (A) have outer diameters of 0.4 to 5 $\mu$m.

[5] A hollow particles-containing liquid composition according to any of [1] to [4], wherein the dispersing agent (C) is a compound represented by the following formula (1):

$$T^1O\text{-}(RO)_n(EO)_m\text{-}T^2 \qquad (1)$$

($T^1$ is a hydrogen atom, an alkyl group of 1 to 18 carbon atoms or an alkenyl group of 2 to 18 carbon atoms; $T^2$ is a hydrogen atom, a sulfonic acid (sulfonic acid salt) group, a carboxylic acid (carboxylic acid salt) group, a phosphoric acid (phosphoric acid salt) group, an amino group or an ammonium group; RO is an oxyalkylene group of 3 to 18 carbon atoms; EO is an oxyethylene group; n is an integer of 1 to 50; m is an integer of 0 to 200; n RO groups are the same kind or different plural kinds; and n RO groups and m EO groups are bonded to each other by block bonding or random bonding).

[6] A hollow particles-containing liquid composition according to any of [1] to [5], wherein the organic solvent (B2) is at least one kind selected from the group consisting of water-soluble amines, water-soluble glycol ethers, water-soluble ketones and water-soluble esters.

[7] A hollow particles-containing liquid composition according to any of [1] to [6], which gives a haze of 30% or more when made into a dried film having a thickness of 30 $\mu$m.

[8] A process for producing an aqueous dispersion of crosslinked hollow polymer particles, which comprises:

a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),

a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b), and

a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles.

[9] A process for producing a hollow particles-containing liquid composition, which comprises:

a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),

a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b),

a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles, and

a step of drying the aqueous dispersion (iii) of crosslinked hollow polymer particles and re-dispersing the dried material in a reactive diluent (B1-1) and/or an organic solvent (B2-1) to obtain a hollow particles-containing liquid composition.

[10] A process for producing a hollow particles-containing liquid composition, which comprises:

a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),

a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b),

a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles, and

a step of adding, to the aqueous dispersion (iii) of crosslinked hollow polymer particles, a reactive diluent (B1-1) and/or an organic solvent (B2-1) and then removing water to obtain a hollow particles-containing liquid composition.

[11] An optical article comprising a transparent substrate and a dried film of a hollow particles-containing liquid composition set forth in any of [1] to [7], formed on the surface of the transparent substrate.

[12] An optical article according to [11], wherein the transparent substrate is at least one kind selected from the group consisting of glass, polyethylene terephthalate resin, polycarbonate resin, acrylic resin, triacetyl cellulose resin and norbornene-based resin.

In the hollow particles-containing liquid composition of the present invention, the crosslinked hollow particles contained therein have large particle diameters and good dispersibility in organic solvents; therefore, the crosslinked hollow particles do not give rise to aggregation caused by inferior dispersibility and doe not become foreign matter, making small the amount of foreign matter in hollow particles-containing liquid composition. Since the particle diameters of crosslinked hollow particles are large and the content of foreign matter is small, a high haze can be obtained when the present hollow particles-containing liquid composition has been made into a dried film. By coating the present hollow particles-containing liquid composition on a transparent substrate such as inorganic glass or the like and made into a film, an optical article of high haze can be obtained.

According to the process of the present invention for producing a hollow particles-containing liquid composition, there can be obtained a hollow particles-containing liquid composition which contains crosslinked hollow particles of large particle diameters and is low in foreign matter content.

Best Mode for Carrying Out the Invention

Specific description is made below on the best mode for carrying out the present invention (the best mode may hereinafter be referred to as "embodiment"). The present invention, however, is not restricted to the following embodiment, and it should be construed that design change, improvement, etc. can be added appropriately to the embodiment based on the ordinary knowledge possessed by those skilled in the art as long as there is no deviation from the gist of the present invention.

An embodiment of the hollow particles-containing liquid composition of the present invention is a hollow particles-containing liquid composition which comprises:

(A) crosslinked hollow particles having particle diameters of 0.4 $\mu$m or more and containing 40 mass % or more of a toluene insoluble, in an amount of 5 to 70 mass %,
(B) a reactive diluent (B1) and/or an organic solvent (B2) in an amount of 95 to 30 mass % [the total mass of the crosslinked hollow particles (A) and the reactive diluent (B1) and/or the organic solvent (B2) is 100 mass %], and
(C) a dispersing agent in an amount of 0 to 30 parts by mass relative to 100 parts by mass of the total of the crosslinked hollow particles (A) and the reactive diluent (B1) and/or the organic solvent (B2). By employing such a constitution, there can be obtained a hollow particles-containing liquid composition which is low in foreign matter content and which can give a high haze value (the haze value may be hereinafter referred to simply as "haze") when made into a film. That is, since the crosslinked hollow particles contained in the liquid composition have large particle diameters and good dispersibility in organic solvents, the crosslinked hollow particles give no rise to aggregation caused by inferior dispersibility and formation of foreign matter and the content of foreign matter in hollow particles-containing resin composition is small. Further, since the crosslinked hollow particles have large particle diameters and the content of foreign matter is small, a high haze is obtained when the hollow particles-containing resin composition has been made into a dried film.

Here, the foreign matter is an aggregate of hollow particles which appear owing to the insufficient dispersibility of hollow particles, and ordinarily is a solid having diameters as large as 10 times or more the volume-average particles diameter (outer diameter) of hollow particles; therefore, the presence of foreign matter in optical article film can be observed by an optical microscope. The presence of foreign matter in optical article causes optical non-uniformity (glow points), or generates streaks when the hollow particles-containing liquid composition has been coated and another coating is applied thereon. The amount (number) of foreign matter in optical article is preferably 10 or less per 10 $cm^2$, more preferably 2 or less, most preferably less than 1.

The toluene insoluble refers to a residue which remains undissolved when the crosslinked hollow particles (A) contained in the hollow particles-containing liquid composition have been dissolved in toluene. The toluene insoluble is measured by the following method.

(Method for measurement of toluene insoluble)

The hollow particles-containing resin composition is subjected to centrifugation at 15,000 rpm for 30 minutes using a centrifuge, to obtain a precipitate of hollow particles; the precipitate is dried at 25˚C for 24 hours using a vacuum drier, to obtain dried hollow particles; about 1 g of the dried hollow particles is weighed precisely (w1 g) and immersed in 100 ml of toluene; the liquid is stirred at 80˚C for 6 hours and then subjected to centrifugation at 15,000 rpm for 30 minutes using a centrifuge; part (v ml) of the supernatant liquid of centrifugation is collected and vaporized to dryness; the resulting solid residue (toluene soluble) is weighed (w2 g); and toluene insoluble is calculated using the following expression (2).

$$\texttt{Toluene insoluble (mass \%) = ((w1-w2x(100/v))/w1)x100    (2)}$$

The toluene insoluble contained in the crosslinked hollow particles (A) is, as mentioned previously, 40 mass % or more, preferably 60 mass % or more, further preferably 80 mass % or more. When the toluene insoluble is less than 40 mass %, the haze of formed film is low and foreign matter tends to appear.

In the hollow particles-containing liquid composition of the present embodiment, the crosslinked hollow particles (A) contained therein have outer diameters of preferably 0.4 to 3 $\mu$m, more preferably 0.4 to 4 $\mu$m, particularly preferably 0.4 to 3 $\mu$m, most preferably 0.5 to 2 $\mu$m for higher haze and good dispersibility.

In the hollow particles-containing liquid composition of the present embodiment, the reactive diluent (B1) of the reactive diluent (B1) and/or the organic solvent (B2) both contained therein, includes the followings. They may be used in a monomer state or in an oligomer state. That is, vinyl aromatic compounds such as styrene, α-methylstyrene, o-methylstyrene, m-methylstyrene, p-methylstyrene, p-tert-butylstyrene, divinylbenzene, trivinylbenzene, diisopropenylbenzene, o-chlorostyrene, m-chlorostyrene, p-chlorostyrene, 1,1-diphenylethylene, p-methoxystyrene, N,N-dimethyl-p-aminostyrene, N,N-diethyl-p-aminostyrene, vinylpyridine and the like; unsaturated nitriles such as (meth)acrylonitrile, α-chloroacrylonitrile, α-chloromethylacrylonitrile, α-methoxyacrylonitrile, α-ethoxyacylonitrile, crotonic acid nitrile, cinnamic acid nitrile, itaconic acid dinitrile, maleic acid dinitrile, fumaric acid dinitrile and the like; (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-amyl (meth)acrylate, isoamyl (meth)acrylate, pentyl (meth)acrylate, hexyl (meth)acrylate, heptyl (meth)acrylate, n-octyl (meth)acrylate, 2-ethylhexyl (meth)acrylate, octyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, 2-methoxyethyl (meth)acrylate, 2-ethoxyethyl (meth)acrylate, 2-(n-propoxy)ethyl (meth)acrylate and the like; fluorine-containing (meth) acrylic acid esters such as 2,2,2-trifluoroethyl (meth)acrylate, 2,2,3,3,3-pentafluoropropyl (meth)acrylate, 2-(perfluorobutyl)ethyl (meth)acrylate, 2-(perfluorohexyl)ethyl (meth)acrylate, 2-(perfluorooctyl)ethyl (meth)acrylate, 2-(perfluorodecyl)ethyl (meth)acrylate and the like; unsaturated carboxylic acid esters such as methyl crotonate, ethyl crotonate, propyl crotonate, butyl crotonate, methyl cinnamate, ethyl cinnamate, propyl cinnamate, butyl cinnamate and the like; hydroxyl group-containing (meth)acrylic acid esters such as 2-hydroxyethyl (meth)acrylate, 2-hydroxypropyl (meth) acrylate, 3-hydroxypropyl (meth)acrylate, 2-hydroxybutyl (meth)acrylate and the like; (meth)acrylic acid monoesters of polyalkylene glycols such as polyethylene glycol, polypropylene glycol and the like; cyano group-containing (meth)acrylic acid esters such as cyanoethyl (meth)acrylate, cyanopropyl (meth)acrylate and the like; aryloxyalkyl esters of (meth) acrylic acid, such as 2-phenoxyethyl (meth)acrylate, 2-phenoxypropyl (meth)acrylate, 3-phenoxypropyl (meth)acrylate and the like; (meth)acrylic acid monoesters of alkoxypolyalkylene glycols such as methoxypolyethylene glycol, ethoxypolyethylene glycol, methoxypolypropylene glycol, ethoxypolypropylene glycol and the like; (meth)acrylic acid monoesters of aryloxypolyalkylene glycols such as phenoxypolyethylene glycol, phenoxypolypropylene glycol and the like; (meth)acrylic acid diesters of alkylene glycols such as ethylene glycol, propylene glycol, 1,4-butanediol, 1,5-pentanediol, 1,6-hexanediol and the like; (meth)acrylic acid diesters of two-terminal hydroxy polymers such as polyalkylene glycol (e.g. polyethylene glycol and polypropylene glycol, and the number of alkylene glycol units is, for example, 2 to 23), two-terminal hydroxy polybutadiene, two-terminal hydroxy polyisoprene, two-terminal hydroxy butadiene-acrylonitrile copolymer, two-terminal hydroxy polycaprolactone and the like; (meth)acrylic acid oligoesters (e.g. diester, triester and tetraester) of tri- or higher alcohols such as glycerine, 1,2,4-butanetriol, trimethylolalkane (the carbon atom(s) of alkane is (are), for example, 1 to 3), tetramethylolalkane (the carbon atom(s) of alkane is (are), for example, 1 to 3), pentaerythritol and the like; (meth)acrylic acid oligoesters such as (meth)acrylic acid tri- or tetraester of polyalkylene glycol adduct of tri- or higher valent alcohol; (meth)acrylic acid oligoesters of cyclic polyvalent alcohols such as 1,4-cyclohexanediol, 1,4-benzenediol, 1,4-dihydroxyethylbenzene and the like; (meth)acrylic acid oligoester prepolymers such as polyester (meth) acrylate, epoxy (meth)acrylate, urethane (meth)acrylate, alkyd resin (meth)acrylate, silicone resin (meth)acrylate, spiran resin (meth)acrylate and the like; unsaturated carboxylic acids such as (meth)acrylic acid, crotonic acid, cinnamic acid, itaconic acid, itaconic anhydride, maleic acid, maleic anhydride, fumaric acid, citraconic acid, mesaconic acid and the like; free carboxyl group-containing esters such as monomethyl esters, monoethyl esters, monopropyl esters, monobutyl esters, monohexyl esters or monooctyl esters of unsaturated polycarboxylic acids (e.g. itaconic acid, maleic acid, fumaric acid, citraconic acid and mesaconic acid); polycarboxylic acid esters such as dimethyl esters, diethyl esters, dipropyl esters, dibutyl esters, dihexyl esters or dioctyl esters of unsaturated polycarboxylic acids (e.g. itaconic acid, maleic acid, fumaric acid, citraconic acid and mesaconic acid); unsaturated amides such as (meth)acrylamide, N-hydroxymethyl (meth)acrylamide, N-(2-hydroxyethyl) (meth)acrylamide, N,N-bis-(2-hydroxyethyl) (meth)acrylamide, N,N'-methylene-bis-(meth)acrylamide, N,N'-ethylene-bis-(meth)acrylamide, N,N'-hexamethylene-bis-(meth)acrylamide, N,N-dimethyl (meth)acrylamide, diethyl (meth)acrylamide, crotonic acid amide, cinnamic acid amide and the like; carboxylic acid vinyl esters such as vinyl acetate, vinyl propionate, vinyl butyrate, vinyl pivalate, vinyl caproate, vinyl versatate, vinyl stearate and the like; radical polymerizing monomers such as dicyclopentadiene, butadiene, isoprene, allyl glycidyl ether, glycidyl (meth)acrylate and the like; vinyl monomers such as N-vinylpyrrolidone, N-vinylcaprolactam, vinylimidazole, vinylphenol and the like; isobornyl (meth)acrylate, bornyl (meth)acrylate, tricyclodecanyl (meth)acrylate, dicyclopentanyl (meth) acrylate, dicyclopentenyl (meth)acrylate, cyclohexyl (meth)acrylate, benzyl (meth)acrylate, 4-butylcyclohexyl (meth) acrylate, acryloylmorpholine, tetrahydrofuryl (meth)acrylate, butoxyethyl (meth)acrylate, ethoxydiethylene glycol (meth) acrylate, methoxyethylene glycol (meth)acrylate, dimethylaminoethyl (meth)acrylate, diethylaminoethyl (meth)acrylate, 7-amino-3,7-dimethyloctyl (meth)acrylate, ethyldiethylene glycol (meth)acrylate, tetraethylene glycol (meth)acrylate, trimethylolpropanetrioxyethyl (meth)acrylate, trimethylolpropanetrioxypropyl (meth)acrylate, diacetone (meth)acrylamide, isobutoxy (meth)acrylamide, tert-octyl (meth)acrylamide, octyl (meth)acrylamide, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, vinyl ether, N,N-dimethylaminopropylallylamide, etc.

When there is used, of these, a crosslinkable radical-polymerizing monomer such as divinylbenzene, trivinylbenzene, dicyclopentadiene, butadiene, isoprene, allyl glycidyl ether, glycidyl (meth)acrylate, ethylene glycol dimethacrylate, trimethylolpropane tri(meth)acrylate, pentaerythritol tri(meth)acrylate, dipentaerythritol hexa(meth)acrylate or the like and there is further used a thermal polymerization initiator or a photo-polymerization initiator, the hollow particles-containing liquid composition of the present embodiment can be suitably used as a so-called solvent-less, light-scattering coating material. The above-mentioned crosslinkable radical-polymerizing monomers can be used singly or in admixture of two or more kinds.

In the hollow particles-containing liquid composition of the present embodiment, the organic solvent (B2) of the reactive diluent (B1) and/or organic solvent (B2) contained therein is preferably at least one kind selected from the group consisting of water-soluble amines, water-soluble glycol ethers, water-soluble ketones and water-soluble esters. By using such a solvent, the crosslinked hollow particles can be dispersed effectively and the present hollow particles-containing liquid composition becomes superior in safety as well as in coatability.

In the hollow particles-containing liquid composition of the present embodiment, the dispersing agent (C) is contained therein in an amount of 0 to 30 parts by mass, preferably 1 to 25 parts by mass, further preferably 2 to 20 parts by mass relative to 100 parts by mass of the total of the crosslinked hollow particles (A) and the reactive diluent (B1) and/or the organic solvent (B2). When the amount of the dispersing agent (C) is larger than 30 parts by mass, there is a problem that the dispersing agent (C) may bleed out after drying, which may cause optical non-uniformity.

The dispersing agent (C) contained in the hollow particles-containing liquid composition of the present embodiment is preferably a compound represented by the following formula (1). Thereby, the dispersibility of the crosslinked hollow particles (A) is improved strikingly.

$$T^1O\text{-}(RO)_n(EO)_m\text{-}T^2 \qquad (1)$$

($T^1$ is a hydrogen atom, an alkyl group of 1 to 18 carbon atoms or an alkenyl group of 2 to 18 carbon atoms; $T^2$ is a hydrogen atom, a sulfonic acid (sulfonic acid salt) group, a carboxylic acid (carboxylic acid salt) group, a phosphoric acid (phosphoric acid salt) group, an amino group or an ammonium group; RO is an oxyalkylene group of 3 to 18 carbon atoms; EO is an oxyethylene group; n is an integer of 1 to 50; m is an integer of 0 to 200; n RO groups are the same kind or different plural kinds (that is, there may be present n same ROs or there may be present n different ROs (e.g. $R^1O$, $R^2O$, $R^3O$, etc.); and n RO groups and m EO groups are bonded to each other by block bonding or random bonding).

When the n RO groups and the m EO groups are bonded by block bonding, the order of the alignment of the RO groups and the EO groups may be any.

The hollow particles-containing liquid composition of the present embodiment is preferred to further contain a resin (D). The resin (D) is preferably at least one kind selected from the group consisting of thermosetting resins, thermoplastic resins and photo-setting resins. By using such a resin, the hollow particles-containing liquid composition of the present embodiment can form a good film when coated on a transparent substrate or the like and dried, and can give a high haze when made into an optical article. As more specific examples of the resin (D), there can be mentioned the same resins (D) as used in the later-described embodiment of the present invention process for producing a hollow particles-containing liquid composition. As to the proportions of the resin (D) and the crosslinked hollow particles (A), the amount of the resin (D) is preferably 0.2 to 1,000 parts by mass, more preferably 0.3 to 10 parts by mass relative to 100 parts by mass of the crosslinked hollow particles (A). When the amount of the resin (D) is less than 0.2 part by mass, the strength of the film formed may be low and, when the amount is more than 1,000 parts by mass, the haze obtained may be low.

The hollow particles-containing liquid composition of the present embodiment, when made into a dried film of 30 $\mu$m in thickness, has a haze of preferably 30% or more, more preferably 40% or more, further preferably 50% or more, particularly preferably 60% or more, most preferably 70% or more. When the haze is lower than 30%, the optical article formed has an insufficient light-scattering property. The light-scattering property when the hollow particles-containing liquid composition of the present embodiment has been made into a film, appears mainly owing to the large difference in refractive index between the polymer portion (shell layer) forming the outer periphery of crosslinked hollow particles (A) and the hollow (air) portion inside the crosslinked hollow particles. It is preferred for higher light-scattering that there is also a difference in refractive index between the above-mentioned polymer portion and the resin portion (the substrate of formed film) contiguous to the crosslinked hollow particles (A).

Next, description is made on an embodiment of the present invention process for producing a hollow particles-containing liquid composition.

The process for producing a hollow particles-containing liquid composition, according to the present embodiment is a process which comprises emulsion-polymerizing a particular monomer (a first polymerizing monomer) (a) in an aqueous medium to prepare a dispersion of first polymer particles (i), then preparing a dispersion of core-shell polymer particles (ii) wherein each surface layer of the first polymer particles (i) has been covered with a shell layer containing a second polymer derived from a particular second polymerizing monomer (b) and the unreacted second polymerizing monomer (b), then adjusting the pH of the dispersion of core-shell polymer particles (ii) with a volatile base to 7 or more (a value at 25°C), to neutralize and swell the core-shell polymer particles (ii) to prepare an aqueous dispersion (iii) of crosslinked polymer particles, and drying the aqueous dispersion (iii) of crosslinked polymer particles and re-dispersing the dried material in a component (B) [a reactive diluent (B1) and/or an organic solvent (B2)], or subjecting the aqueous dispersion (iii) of crosslinked polymer particles to replacement with solvent, to obtain a hollow particles-containing liquid composition. The production process of the present embodiment is described specifically below on individual steps.

[Preparation of dispersion of first polymer particles (i)]

In the present embodiment, first, there is emulsion-polymerized, in an aqueous medium, a first polymerizing monomer (a) composed of an unsaturated carboxylic acid (a-1) (hereinafter, this may be referred to as "monomer (a-1)") and a radical-polymerizing monomer (a-2) (hereinafter, this may be referred to as "monomer (a-2)"), to prepare a dispersion of first polymer particles (i). As the aqueous medium, water may be used.

As the monomer (a-1), there can be mentioned, for example, mono- or dicarboxylic acids such as (meth)acrylic acid, crotonic acid, maleic acid, fumaric acid, itaconic acid and the like, and acid anhydrides of these dicarboxylic acids. Of these, preferred from the stability of particles are (meth)acrylic acid, itaconic acid, etc. and more preferred is methacrylic acid. They can be used singly or in combination of two or more kinds. As the monomer (a-2), there can be mentioned, for example, unsaturated carboxylic acid esters such as methyl (meth)acrylate, ethyl (meth)acrylate, propyl (meth) acrylate, butyl (meth)acrylate, 2-ethylhexyl methacrylate and the like; aromatic monomers such as styrene, $\alpha$-methyl-styrene and the like; (meth)acrylonitrile; vinyl acetate; and N,N-dimethyl(meth)acrylamide. Of these, preferred are unsaturated carboxylic acid esters and it is particularly preferred that 50 mass % or more of the monomer (a-2) is an unsaturated carboxylic acid ester. When the unsaturated carboxylic acid is less than 50 mass % of the monomer (a-2), the hollow particles formed have a distorted shape, which may result in hollow particles of low hollow portion ratio. There may also be used crosslinkable monomers such as butadiene, isoprene, divinylbenzene, ethylene glycol di(meth)acrylate and the like. The use amount thereof is preferably 0 to 5 mass %, more preferably 0.2 to 2 mass % of the total of the first polymerizing monomer (a). A proportion of the crosslinkable monomer, of more than 50 mass % of the monomer (a) is not preferred because the swelling with a volatile base is insufficient, resulting in a low haze.

As to the proportions of the monomer (a-1) and the monomer (a-2) in the first polymerizing monomer (a), the monomer (a-1) is 5 to 80 mass % and the monomer (a-2) is 20 to 95 mass %; preferably, the monomer (a-1) is 10 to 60 mass % and the monomer (a-2) is 40 to 90 mass %; more preferably, the monomer (a-1) is 20 to 50 mass % and the monomer (a-2) is 50 to 80 mass %. A proportion of the monomer (a-1), of less than 5 mass % is not preferred because the swelling with a volatile base is insufficient, resulting in a low haze. A proportion of the monomer (a-1), of more than 80 mass % is not preferred because the polymerization stability of the first polymer particles (i) is low, it is difficult to uniformly cover each surface layer of the first polymer particles (i) with a polymer derived from a second polymerizing monomer (b) described later, and the shape of hollow particles formed becomes distorted.

As to the method for emulsion-polymerizing the first polymerizing monomer (a) in an aqueous medium, there is no particular restriction. For example, the monomer may be added in one portion and polymerized, or may be added continuously and polymerized. The latter is preferred in order to obtain particles of uniform particle diameter stably. The preparation of the first polymer particles (i) may be conducted by polymerization of one stage or by polymerization of two or more stages. Further, the first polymerizing monomer (a) may be emulsion-polymerized in the presence of seed particles; as the seed particles, there are particularly preferred those having a SP value (a solubility parameter) close to that of the first polymerizing monomer (a), in order to obtain particles of uniform particle diameter stably. As the emulsifier used, there can be mentioned, for example, an anionic surfactant, a nonionic surfactant, a cationic surfactant, an amphoteric surfactant and an organic suspension-protecting agent. Of these, there are preferred, for the stability of particles, an anionic surfactant, a nonionic surfactant and an organic suspension-protecting agent. There may be used an emulsifier having radical-polymerizing unsaturated bond in the molecule, i.e. a reactive emulsifier. These emulsifiers can be used alone or in admixture of two or more kinds.

As the anionic surfactant, there can be mentioned, for example, rosinates such as potassium rosinate, sodium rosinate and the like; sodium or potassium salts of fatty acids, such as potassium oleate, potassium laurate, sodium laurate, sodium stearate, potassium stearate and the like; salts of fatty alcohol sulfates, such as sodium lauryl sulfate and the like; and alkylarylsulfonic acids such as sodium dodecylbenzenesulfonate and the like.

As the nonionic surfactant, there can be mentioned, for example, polyoxyalkylene alkyl esters, polyoxyalkylene alkyl ethers and polyoxyalkylene alkyl phenyl ethers. There may be also used, as the emulsifier, a dispersing agent (C) represented by the formula (1), which is described later.

As the organic suspension-protecting agent, there can be mentioned, for example, hydrophilic synthetic high-molecular substances such as polyacrylic acid, polymethacrylic acid, polyvinylsulfonic acid, polyvinyl alcohol, polyvinylpyrrolidone, polyethylene glycol and the like; hydrophilic natural high-molecular substances such as gelatin, water-soluble starch and the like; and hydrophilic semisynthetic high-molecular substances such as carboxymethyl cellulose and the like.

As the reactive emulsifier, there can be mentioned, for example, emulsifiers having, in the molecule, ethylenically unsaturated group as a radical-reactive group, polyoxyalkylene group, sulfone group or sulfuric acid group as a hydrophilic group, and alkyl group as a hydrophobic group. As commercial products of the reactive emulsifier, there can be mentioned, for example, anionic reactive emulsifiers such as "LATEMUL S-180A", "LATEMUL PD-104" (products of Kao Corporation), "ELEMINOL JS-2" (a product of Sanyo Chemical Industries, LTD.), "AQUALON HS-10", "AQUALON BC-10", "AQUALON KH-10" (products of Daiichi Kogyo Seiyaku Co., Ltd.), "ADEKA REASOAP SE-10N", "ADEKA REASOAP SR-10" (products of Asahi Denka Kogyo K.K.) and the like; and nonionic reactive emulsifiers such as "AQUALON RS-20" (products of Daiichi Kogyo Seiyaku Co., Ltd.), "ADEKA REASOAP NE-20", "ADEKA REASOAP NR-20" (a product of Asahi Denka Kogyo K.K.) and the like.

The polymerization of the monomer (a-1) and the monomer (a-2) is radical polymerization and is initiated by a predetermined polymerization initiator. As the polymerization initiator, there can be mentioned, for example, redox type initiators which are a combination of an organic hydroperoxide (typified by cumene hydroperoxide, diisopropylbenzene hydroperoxide, paramenthane hydroperoxide, tert-butyl hydroperoxide, etc.) and a reducing agent (typified by saccharated pyrophosphoric acid formulation, sulfoxylate formulation, mixed formulation of saccharated pyrophosphoric acid formulation and sulfoxylate formulation, formaldehyde resin formulation, etc.); persulfates such as potassium persulfate, ammonium persulfate and the like; azobisisobutyronitrle; benzoyl peroxide; and lauroyl peroxide. Of these, there are preferred, for the stability of particles and the uniformity of particle diameters, persulfates such as potassium persulfate, ammonium persulfate and the like; azobisisobutyronitrile; and benzoyl peroxide. As necessary, a reducing agent may be used in combination with the polymerization initiator.

In the emulsion polymerization of the present embodiment, there can be used, as necessary, a chain transfer agent, a chelating agent, an inorganic electrolyte, etc. As specific examples of the chain transfer agent, there can be mentioned mercaptans such as octyl mercaptan, n-dodecyl mercaptan, tert-dodecyl mercaptan, n-hexadecyl mercaptan, n-tetradecyl mercaptan, tert-tetradecyl mercaptan, n-octyl thioglycol and the like; xanthogen disulfides such as dimethylxanthogen disulfide, diethylxanthogen disulfide, diisopropylxanthogen disulfide and the like; thiuram disulfides such as tetramethylthiuram disulfide, tetraethylthiuram disulfide, tetrabutylthiuram disulfide and the like; halogenated hydrocarbons such as chloroform, carbon tetrachloride, ethylene bromide and the like; hydrocarbons such as pentaphenylethane, α-methylstyrene dimer and the like; acrolein, methacrolein, allyl alcohol, 2-ethylhexyl thioglycolate, terpinolene, α-terpinene, γ-terpinene, and dipentene. These can be used singly or in admixture of two or more kinds. Of these, mercaptans, α-methylstyrene dimer, etc. are used suitably. As the chelating agent, there can be mentioned ethylenediaminetetraacetic acid, nitrilo-triacetic acid, diethylenetriaminepentaacetic acid, hydroxyethylenediaminetriacetic acid, etc. As the inorganic electrolyte, there can be used sodium carbonate, sodium hydrogencarbonate, potassium carbonate, potassium hydrogencarbonate, sodium sulfate, potassium sulfate, ammonium sulfate, etc.

The polymerization temperature is preferably 5 to 120˚C, more preferably 50 to 100˚C. When the temperature is lower than 5˚C, the reactivity of the unsaturated carboxylic acid is low and the particles formed may be unstable. When the temperature is higher than 120˚C, the particles formed may be unstable.

The first polymer particles (i) obtained above, later become core particles (to be described later) which swell in alkali. The particle diameters of the first polymer particles (i) are preferably 0.1 to 2 μm, more preferably 0.2 to 2 μm. The weight-average molecular weight of the first polymer particles (i) is preferably 1,000 to 50,000, more preferably 2,000 to 20,000.

[Preparation of dispersion of core-shell polymer particles (ii)]

In the present embodiment, after the preparation of the first polymer particles (i), there is emulsion-polymerized, in an aqueous solvent in the presence of 5 to 1,000 parts by mass of the first polymer particles (i), 100 parts by mass of a second polymerizing monomer (b) composed of 10 to 80 mass % of a crosslinkable radical-polymerizing monomer (b-1) (this may hereinafter be referred to as "monomer (b-1)"), 0 to 20 mass % of an unsaturated carboxylic acid (b-2) (this may hereinafter be referred to as "monomer (b-2)") and 0 to 90 mass % of other radical-polymerizing monomer (b-3) copolymerizable with the monomer (b-1) (this may hereinafter be referred to as "monomer (b-3)"), to prepare a dispersion of core-shell polymer particles (ii) wherein each surface layer of the first polymer particles (i) is covered with a shell layer containing a second polymer derived from the second polymerizing monomer (b) and the unreacted second polymerizing monomer (b).

As the monomer (b-1), there can be used crosslinkable radical-polymerizing monomers such as divinylbenzene, trivinylbenzene, dicyclopentadiene, butadiene, isoprene, acryl glycidyl ether, glycidyl (meth)acrylate, ethylene glycol dimethacrylate, trimethylolpropane tri(meth)acrylate, pentaerythritol tri(meth)acrylate, dipentaerythritol hexa(meth)acrylate and the like. Use of the crosslinkable radical-polymerizing monomer (b-1) is preferred because the shape of the hollow particles obtained finally is protected from the swelling, decomposition, etc. caused by thermal or mechanical stress, solvent or chemical reagent and resultantly a high haze is exhibited. In particular, divinylbenzene and ethylene glycol di(meth)acrylate are preferred. The amount of the monomer (b-1) used is 10 to 80 mass % of the total amount of the monomer (b), preferably 10 to 60 mass %, more preferably 10 to 50 mass %. An amount of the crosslinkable radical-polymerizing monomer (b-1) of more than 80 mass % is not preferred because the hollow portion ratio of the particles obtained is insufficient, which may result in a low haze.

As the monomer (b-2), there can be used the same unsaturated carboxylic acids as mentioned as examples of the monomer (a-1). In particular, (meth)acrylic acid, itaconic acid, etc. are preferred for the stability of the particles obtained.

As the monomer (b-3), there can be used non-crosslinkable radical-polymerizing monomers such as monoethylenic aromatic compound (e.g. styrene or $\alpha$-methylstyrene), unsaturated carboxylic acid ester (e.g. methyl (meth) acrylate, ethyl (meth)acrylate, propyl (meth)acrylate, butyl (meth)acrylate, butyl (meth)acrylate or 2-ethylhexyl (meth) acrylate), (meth)acrylonitrile, vinyl acetate, N,N-dimethyl (meth)acrylamide and the like. Of these, monoethylenic aromatic compounds such as styrene and the like are preferred.

As to the proportions of the monomer (b-2) and the monomer (b-3) in the second polymerizing monomer (b), the monomer (b-2) is 0 to 20 mass % and the monomer (b-3) is 0 to 90 mass %; preferably, the monomer (b-2) is 0.1 to 10 mass % and the monomer (b-3) is 30 to 89.9 mass %; more preferably, the monomer (b-2) is 0.2 to 5 mass % and the monomer (b-3) is 45 to 89.9 mass %. When the proportion of the monomer (b-1) is more than 20 mass %, the polymerization stability of the monomer (b) is strikingly inferior and the polymer particles after treatment with volatile base and heat treatment are distorted and their hollow portion ratio is low, resulting in inferior haze.

In the present embodiment, as described previously, 100 parts by mass of the second polymerizing monomer (b) is emulsion-polymerized in the presence of 5 to 1,000 parts by mass, preferably 7 to 100 parts by mass, more preferably 10 to 50 parts by mass of the first polymer particles (i), to prepare core-shell polymer particles (ii) wherein each surface layer of the first polymer particles (i) is covered with a shell layer containing a second polymer derived from the second polymerizing monomer (b) and the unreacted second polymerizing monomer (b). When the amount of the first polymer particles (i) is less than 5 parts by mass, the formation of the hollow portion of each crosslinked hollow particles (A) is insufficient, resulting in inferior haze. When the amount of the first polymer particles (i) is more than 1,000 parts by mass, the stability of polymerization is inferior and the crosslinked hollow particles after treatment with volatile base and heat treatment are broken, distorted and crushed, resulting in low haze.

As to the method for emulsion-polymerizing the second polymerizing monomer (b), there is no particular restriction, and there can be used the same method as mentioned in the first polymer particles (i). In this case, it is preferred that, part or the whole of the second polymerizing monomer (b) is fed in one portion at the start and emulsion-polymerized, in order to make complete the shell structure which covers the core. The mass ratio of the second polymerizing monomer (b) fed in one portion at the start and emulsion-polymerized and the first polymer particles (i) is preferably 10:1 to 1:10, particularly preferably 5:1 to 1:5. When the ratio is 10:1 or higher, a problem arises with respect to the stability of polymerization. When the ratio is 1:10 or lower, the coverage for the first polymer particles (i) is insufficient, the hollow particles are distorted, and the hollow portion ratio thereof is low. As the second polymerizing polymer (b) which is fed in one portion at the start and emulsion-polymerized, there are particularly preferred monoethylenic aromatic compounds (e.g. styrene) and unsaturated carboxylic acid esters (e.g. methyl (meth)acrylate). In order to allow each hollow particle to have a higher hollow portion ratio, it is preferred to conduct polymerization using only the monomer (b-3) at the start and, when about 25 mass % of the total amount of the second polymerizing monomer (b) has been polymerized, conduct polymerization also using the monomer (b-1) and the monomer (b-2). It is also preferred that, in the shell layer of the core-shell polymer particles (ii), the mass ratio of the second polymer derived from the second polymerizing monomer (b) and the unreacted second polymerizing monomer (b) is 99:1 to 50:50, preferably 97:3 to 80:20. A mass ratio of 99:1 or higher is not preferred because no high hollow portion ratio is obtainable unless a high temperature is employed at the time of neutralization by a volatile base. A mass ratio of 50:50 or lower is not preferred, either, because the control of temperature and pH during neutralization and swelling is difficult and the hollow particles are distorted, resulting in a low haze.

In the core-shell polymer particles (ii) obtained thus, it is preferred that at least one layer of the polymer layers derived from the monomer (b) has a glass transition temperature of 50˚C or higher, from the standpoint of haze. The particle diameters of the core-shell polymer particles (ii) are preferably 0.15 to 4 $\mu$m, more preferably 0.25 to 3 $\mu$m.

[Preparation of aqueous dispersion (iii) of crosslinked hollow polymer particles]

In the present embodiment, the pH of the dispersion of core-shell polymer particles (ii) prepared in the previous step is adjusted to 7 or more (a value at 25˚C) using a volatile base such as ammonia, amine or the like, to give rise to neutralization and swelling, heating is made as necessary, and further the unreacted second polymerizing monomer (b) is polymerized, whereby an aqueous dispersion (iii) of crosslinked hollow polymer particles is prepared. Incidentally, the pH (a value at 25˚C) means a pH value at 25˚C and does not mean that the pH-adjusting temperature, etc. is 25˚C.

The volatile base can permeate the polymer derived from the second polymerizing monomer (b); therefore, the first polymer particles (i) component is neutralized by the addition of the volatile base. In association therewith, the first polymer particles (i) component absorbs a substantial amount of water and the core-shell polymer particles (ii) become hollow polymer particles each having a hollow portion (a pore) inside. The formed particles contain, in an aqueous dispersion state, water in the pores. The temperature of the dispersion when the core-shell polymer particles (ii) are neutralized and swollen, differs depending upon the amount of the unreacted second polymerizing monomer (b) present in the shell layer of the core-shell polymer particles (ii) but is preferably not higher than the glass transition temperature (Tg) of the polymer constituting the shell of each final hollow particle. When neutralization and swelling are conducted at a temperature higher than the glass transition temperature, there is a possibility that the core inside the shell jumps out of the shell, resulting in a reduced hollow portion ratio.

After the neutralization and swelling of the core-shell polymer particles (ii), the unreacted second polymerizing monomer (b) present in the shell layer is preferred to be polymerized sufficiently, from the standpoint of odor. The final concentration of the second polymerizing monomer (b) in the dispersion is preferably 3,000 ppm or less, more preferably 1,000 ppm or less, particularly preferably 300 ppm or less.

In order to thoroughly polymerize the unreacted second polymerizing monomer (b) present in the shell layer of the core-shell polymer particles (ii) after neutralization and swelling, there may be added a polymerization initiator, a polymerization initiation aid, a reducing agent, etc. As the polymerization initiator, there can be mentioned, for example, redox type initiators which are a combination of an organic hydroperoxide (typified by cumene hydroperoxide, diisopropylbenzene hydroperoxide, paramenthane hydroperoxide, tert-butyl hydroperoxide, etc.) and a reducing agent (typified by saccharated pyrophosphoric acid formulation, sulfoxylate formulation, mixed formulation of saccharated pyrophosphoric acid formulation and sulfoxylate formulation, formaldehyde resin formulation, etc.); persulfates such as potassium persulfate, ammonium persulfate and the like; azobisisobutyronitrile; benzoyl peroxide; and lauroyl peroxide. Of these, a combination of tert-butyl hydroperoxide and a formaldehyde resin is preferred for the high reactivity.

It is also preferred for obtaining a high haze that, after the neutralization and swelling of the core-shell polymer particles (ii), a radical-polymerizing monomer is added newly and polymerized to make the resulting polymer part of the shell of hollow particles. As the monomer used therefor, a monomer such as the monomer (b-1), the monomer (b-2), the monomer (b-3) or the like is preferred, and the monomer (b-1) is particularly preferred. In this case, addition of the above-mentioned initiator system is preferred.

In the present embodiment, an aqueous dispersion of crosslinked hollow particles (A) [an aqueous dispersion (iii) of crosslinked hollow polymer particles] can be obtained by the above production steps. The particle diameters of the crosslinked hollow particles (A) are preferably 0.4 to 5 $\mu$m, more preferably 0.4 to 4 $\mu$m, particularly preferably 0.4 to 3 $\mu$m, most preferably 0.5 to 2 $\mu$m from the standpoints of haze and dispersibility. The hollow portion volume ratio of the crosslinked hollow particle (A) is preferably 20 to 90%, more preferably 25 to 80%, most preferably 30 to 60% from the standpoint of haze. Each crosslinked hollow particle (A) ordinarily has a single pore but may have a plurality of pores, and the crosslinked hollow particles (A) may contain plate-like particles formed as a side product in the production process. The content of the plate-like particles is preferably 50 mass % or less, more preferably 30 mass % or less in 100 mass % of the total solid content, from the standpoint of haze. The solid content of the aqueous dispersion (iii) of crosslinked hollow polymer particles is preferably 5 to 65 mass %, more preferably 10 to 50 mass %, most preferably 15 to 40 mass %.

The aqueous dispersion (iii) of crosslinked hollow polymer particles refers to the hollow particles constituted by the shell of polymers having a crosslinked structure. The production process therefor may be the above-mentioned production process for an aqueous dispersion (iii) of crosslinked hollow polymer particles or may be other production process.

As the other production process, there can be mentioned, for example, a process which comprises adding a foaming agent into polymer particles and then giving rise to expansion of the foaming agent; a process which comprises sealing a volatile substance (e.g. butane) in a polymer and then gasifying the volatile substance to give rise to swelling; a process which comprises melting a polymer, spraying a gas (e.g. air) jet thereon to form gas bubbles therein; a process which comprises producing a w/o/w type monomer emulsion and then conducting polymerization; a process which comprises polymerizing a monomer in a suspension of a pigment in an unsaturated polyester solution; a two-step crosslinking process which comprises producing polymers of different compatibilities on seeds (crosslinked polymer particles), followed by crosslinking; and a process by polymer production (polymerization) and contraction.

Of these production processes, preferred are, from the standpoint of high haze, the above-mentioned process for producing an aqueous dispersion (iii) of crosslinked hollow polymer particles and the process by polymer production (polymerization) and contraction (see JP-A-1987-127336).

[Preparation of hollow particles-containing liquid composition]

The hollow particles-containing liquid composition obtained by the process of the present embodiment for producing a hollow particles-containing liquid composition is a dispersion of crosslinked hollow particles (A) in an organic solvent (B2), a dispersion of crosslinked hollow particles (A) in a reactive diluent (B1), or a dispersion of crosslinked hollow particles (A) in a mixture of an organic solvent (B2) and a reactive diluent (B1). Therefore, the hollow particles-containing liquid composition can be said to be a composition obtained by replacing the water in the aqueous dispersion (iii) of crosslinked hollow polymer particles, with a reactive diluent (B1) and/or an organic solvent (B2). However, the hollow particles-containing liquid composition may contain water unless it deviates from the object of the present invention.

As the method for producing, from the aqueous dispersion (iii) of crosslinked hollow polymer particles, a hollow particles-containing liquid composition wherein the crosslinked hollow particles (A) are dispersed in an organic solvent (B2), there can be mentioned the following methods.

(1) A method which comprises drying the aqueous dispersion (iii) of crosslinked hollow polymer particles to obtain a crosslinked hollow particles (A) and redispersing them in an organic solvent (B2) (this method is hereinafter referred to as "redispersion method").
(2) A method which comprises adding an organic solvent (B2) to the aqueous dispersion (iii) of crosslinked hollow polymer particles and then removing water from the mixture (this method is hereinafter referred to as "replacement-with-solvent method).

[(1) Redispersion method]

This is a method which comprises drying the aqueous dispersion (iii) of crosslinked hollow polymer particles to obtain a crosslinked hollow particles (A) and redispersing it in an organic solvent (B2). As to the method for drying the aqueous dispersion (iii) of crosslinked hollow polymer particles, there is no particular restriction; however, there can be mentioned, for example, a spray-drying method (135 to 155°C), a tray drying method (50 to 70°C) using a hot air dryer, and a fluidized bed drying method (normal temperature to 70°C). As the method for redispersing the crosslinked hollow particles (A) in an organic solvent (B2), there can be used, for example, ordinary stirring, an ultrasonic treatment and a homogenizer.

As to the organic solvent (B2) used in the "redispersion method", there is no particular restriction, and there can be used a water-soluble organic solvent (B2-1) and other organic solvent (B2-2). Incidentally, "water-soluble" in the water-soluble organic solvent (B2-1) of the present invention means that the organic solvent (B2-1) makes a complete solution when it is mixed with water in a 1:1 volume ratio at 20°C.

As the water-soluble organic solvent (B2-1), there can be mentioned, for example, alcohols such as methanol, ethanol, isopropanol and the like; ethers such as dioxane, tetrahydrofuran, 1,3-dioxolane and the like; ketones such as acetone, methyl ethyl ketone, diacetone alcohol, γ-butyrolactone and the like; esters such as ethylene glycol monomethyl ether acetate, ethyl lactate and the like; glycol ethers such as methyl cellosolve, ethyl cellosolve, butyl cellosolve, ethylene glycol isopropyl ether, ethylene glycol dimethyl ether, ethylene glycol tert-butyl ether, 3-methyl-3-methoxybutanol, 3-methoxybutanol, methyl carbitol, ethyl carbitol, butyl carbitol, propylene glycol monomethyl ether, propylene glycol monoethyl ether, propylene glycol monopropyl ether, triethylene glycol monomethyl ether, triethylene glycol monoethyl ether, triethylene glycol monobutyl ether, dipropylene glycol monomethyl ether, dipropylene glycol monoethyl ether, tripropylene glycol monomethyl ether and the like; and amides and amines such as N-dimethylformamide, N-methylacetamide, N,N-dimethylacetamide, N-methylpyrrolidone, morpholine, N-methylmorpholine, N,N-dimethylformamide, monoethanolamine and the like. Of these, particularly preferred are water-soluble amines, water-soluble glycol ethers, water-soluble ketones and water-soluble esters for the dispersibility, safety and coatability.

As the other organic solvent (B2-2), there can be mentioned, for example, straight chain, branched chain or cyclic aliphatic hydrocarbons having 6 to 12 carbon atoms; halogenated hydrocarbons having 1 to 8 carbon atoms; ketones such as 2-heptanone, 3-heptanone, 4-heptanone, cyclohexanone and the like; lactic acid esters such as n-propyl lactate, isopropyl lactate and the like; aliphatic carboxylic acid esters such as ethyl acetate, n-propyl acetate, isopropyl acetate, n-butyl acetate, isobutyl acetate, n-amyl acetate, isoamyl acetate, isopropyl propionate, n-butyl propionate, isobutyl propionate and the like; esters such as methyl 3-methoxypropionate, ethyl 3-methoxypropionate, methyl 3-ethoxypropionate, ethyl 3-ethoxypropinate, methyl pyruvate, ethyl pyruvate and the like; ethylene glycol monoalkyl ether acetates such as ethylene glycol monoethyl ether acetate, ethylene glycol monobutyl ether acetate and the like; propylene glycol monoalkyl ethers such as propylene glycol monobutyl ether and the like; propylene glycol monoalkyl ether acetates such as propylene glycol monomethyl ether acetate, propylene glycol monoethyl ether acetate, propylene glycol monopropyl ether acetate, propylene glycol monobutyl ether acetate and the like; propylene glycol dialkyl ethers such as propylene glycol dimethyl ether, propylene glycol diethyl ether, propylene glycol dipropyl ether, propylene glycol dibutyl ether and the like; and alcohols such as n-hexanol and the like.

When a reactive diluent (B1) is used in place of the organic solvent (B2), there can be obtained a hollow particles-containing liquid composition wherein crosslinked hollow particles (A) are dispersed in a reactive diluent (B1). When the organic solvent (B2) and the reactive diluent (B1) are used together, there can be obtained a hollow particles-containing liquid composition wherein crosslinked hollow particles (A) are dispersed in a mixture of an organic solvent (B2) and a reactive diluent (B1).

In the "redispersion method", the amount of the organic solvent (B2) is preferably 50 to 10,000 parts by mass, more preferably 100 to 1,000 parts by mass relative to 100 parts by mass of the crosslinked hollow particles (A) after drying. When the amount is less than 50 parts by mass, the resulting liquid composition may be inferior in dispersibility. When the amount is more than 10,000 parts by mass, the composition may be inferior in productivity and may have limited applications. In the "redispersion method", since the amount of residual water is small, there is a feature that, by selecting an appropriate dispersing agent (C), the resulting liquid composition is superior in dispersibility regardless of the kind of the organic solvent (B2) used.

It was found that, by allowing a dispersing agent of particular structure to coexist when the aqueous dispersion (iii) of crosslinked hollow polymer particles is dried, the dispersibility in the later step of redispersion can be enhanced strikingly and foreign matter can be controlled. That is, by allowing the aqueous dispersion (iii) of crosslinked hollow polymer particles to contain a dispersing agent (C) represented by the following formula (1) in an amount of preferably 1 mass % or more, more preferably 2 to 30 mass % relative to 100 mass % of the aqueous dispersion (iii), there can be obtained strikingly enhanced dispersibility.

$$T^1O\text{-}(RO)_n(EO)_m\text{-}T^2 \qquad (1)$$

Here, n is 1 to 50; m is 0 to 200; $T^1$ is a hydrogen atom, an alkyl group of 1 to 18 carbon atoms or an alkenyl group of 2 to 18 carbon atoms; $T^2$ is a hydrogen atom, a sulfonic acid (sulfonic acid salt) group, a carboxylic acid (carboxylic acid salt) group, a phosphoric acid (phosphoric acid salt) group, an amino group or an ammonium group; n RO groups may be the same or different from each other; n RO groups and m EO groups may be bonded to each other by block bonding or random bonding; and when they are bonded by block bonding, the alignment order of the RO groups and the EO groups may be any. When the value ranges of n and m and the structure ranges of $T^1$, $T^2$, RO and EO are different from those mentioned above, the reduction in foreign matter content may be inferior. As specific examples of the dispersing agent (C), there can be mentioned LATEMUL PD-104, EMULGEN LS Series, MS Series and PP Series (products of Kao Corporation), FNE SURF NDB Series and IDEP Series, WONDER SURF NDR Series, CP Series, ID Series and S Series (products of Aoki Yushi Kogyo), NIKKOL PBC Series and PEN Series (products of Nikko Chemicals), and EMALEX DAPE (a product of Nihon Emulsion) (these are all trade names). The dispersing agent (C) may be added as an emulsifier in production of the aqueous dispersion (iii) of crosslinked hollow polymer particles, or may be added before drying of the aqueous dispersion (iii) of crosslinked hollow polymer particles

[(2) Replacement-with-solvent method]

The "replacement-with-solvent method" is a method which comprises adding an organic solvent (B2) to the above-obtained aqueous dispersion (iii) of crosslinked hollow polymer particles and then removing water from the mixture.

In this method, the organic solvent (B2) is preferably the above-mentioned water-soluble organic solvent (B2-1) from the standpoint of dispersibility, and is most preferably ethyl lactate from the standpoint of safety and compatibility with a resin (D) described later.

In the "replacement-with-solvent method", removal of water can be conducted by a known method and there can be mentioned, for example, the following methods when the organic solvent (B2) has a boiling point higher than that of water (a case of using ethyl lactate is included).

(Evaporator method)

This is a method of stirring with heating or at normal temperature while blowing a gas (e.g. air or nitrogen) into a reactor under reduced pressure or at normal pressure, to distil off water. As the specific apparatus used, there can be mentioned, for laboratory use, a four-necked flask used for polymerization and, in industrial use, a reactor itself which has been used in polymerization.

(Centrifugal thin film formation method)

This is a method of rotating a conical heating surface and converting a solution into a thin film by a centrifugal force to evaporate water. As the specific apparatus used, there can be mentioned, for laboratory use, an evaporator and, in industrial use, for example, "EVAPOL" (a product of Ohkawara Seisakusho) or "CENTRIFUGAL MOLECULAR DISTILLATION APPARATUS" (a product of Nihon Sharyo).

(Outside circulation spraying method)

This is a method of allowing a treating solution and a heating medium to flow alternately on a surface of layered wave-type plates to evaporate water. As the specific apparatus therefor, there can be used, for example, "BUBBLESS" of Nisso Engineering Co., Ltd.

(Running-down-for-thin-film-formation method)

This is a method of allowing a treating solution to run down in a thin film state from the tops of heating tubes to evaporate water.

(Stirring-for-thin-film-formation method)

This is a method of converting a treating solution into a thin film forcibly by the use of agitating elements secured in a cylindrical heating tube, to evaporate water. As the specific apparatus used, there can be mentioned, for example, "WIPRENE" and "EXEVA" (products of Shinko Pantec Co., Ltd.).

There are other methods for water removal, for example, a method of removing water using a dehydrating agent such as molecular sieve, calcium sulfate, phosphorus pentoxide or the like regardless of the boiling point of the organic solvent (B2) used, and a method of adding an organic solvent while conducting concentration using a ceramic-made ultrafilter membrane.

In the replacement-with-solvent method, the use amount of the organic solvent (B2) including ethyl lactate is 10 to 1,000 parts by mass relative to 100 parts by mass of the aqueous dispersion of crosslinked hollow polymer particles. The replacement-with-solvent method has a feature that a light-scattering material superior in dispersibility can be obtained without using any dispersing agent.

In the "replacement-with-solvent method" as well, there may be added a dispersing agent (C) represented by the above-shown formula (1), as in the "redispersion method". When a reactive diluent (B1) is used in place of the organic solvent (B2), there can be obtained a hollow particles-containing liquid composition wherein crosslinked hollow particles (A) are dispersed in a reactive diluent (B1). When the organic solvent(B2) and the reactive diluent (B1) are used together, there can be obtained a hollow particles-containing liquid composition wherein crosslinked hollow particles (A) are dispersed in a mixture of an organic solvent (B2) and a reactive diluent (B1).

In the process for producing a hollow particles-containing liquid composition, according to the present embodiment, it is preferred to add a resin (D) in the step for producing the hollow particles-containing liquid composition. Addition of the resin (D) makes possible the formation of a good film when the hollow particles-containing liquid composition obtained has been coated on a transparent substrate or the like and dried. When, in particular, a hollow particles-containing liquid composition [wherein crosslinked hollow particles (A) are dispersed in an organic solvent (B2)] has been coated and dried, the formation of a film may be difficult; therefore, it is preferred to add a resin (D) to a dispersion of crosslinked hollow particles (A) in an organic solvent (B2) because this addition of the resin (D) enables effective formation of a film.

As the resin (D) used in the process for producing a hollow particles-containing liquid composition, according to the present embodiment, there can be mentioned a thermosetting resin, a thermoplastic resin and a photo-sensitive resin.

The thermosetting resin used in the process for producing a hollow particles-containing liquid composition, according to the present embodiment, can be known thermosetting resins. However, there are preferred epoxy resins, melamine resins and phenolic resins. By using these resins, the coating films formed is superior particularly in mar resistance and heat resistance. They can be used singly or in admixture of two or more kinds. As to the ratio of the thermosetting resin and the crosslinked hollow particles (A), the amount of the thermosetting resin is preferably 0.2 to 1,000 parts by mass, more preferably 0.3 to 10 parts by mass relative to 100 parts by mass of the crosslinked hollow particles (A). When the amount of the thermosetting resin is less than 0.2 part by mass, the coating film formed may be inferior in strength; when the amount is more than 1,000 parts by mass, a low haze may result.

The thermoplastic resin used in the process for producing a hollow particles-containing liquid composition, according to the present embodiment, can be known thermoplastic resins. However, preferred are olefin-based resins (e.g. polyethylene and polypropylene), acrylic resins, ABS resins, MS resins, styrene-based resins, and fluoroolefin-based resins (e.g. polyvinylidene fluoride); more preferred are acrylic resins, MS resins, styrene-based resins, and fluoroolefin-based resins (e.g. polyvinylidene fluoride). When there is used an acrylic resin, a MS resin or a styrene-based resin and the resulting liquid composition is made into, in particular, an optical article, both a high haze and a high light transmittance can be obtained; when there is used a fluoroolefin-based resin and the resulting liquid composition is made into, in particular, an optical article, a high haze can be obtained. These resins can be used singly or in admixture of two or more kinds. The ratio of the thermoplastic resin and the crosslinked hollow particles (A) is the same as that of the thermosetting resin and the crosslinked hollow particles (A).

The photo-sensitive resin used in the process for producing a hollow particles-containing liquid composition, according to the present embodiment is a high-molecular photo-sensitive resin (polymer) and/or a photo-sensitive resin precursor (photo-polymerizing unsaturated monomer).

The high-molecular photo-sensitive resin (polymer) is not particularly restricted and can be any known such resin as long as the polymer skeleton has photo-polymerizing group introduced therein. As such a polymer skeleton, there can be mentioned, for example, polyethylene skeleton, polyurethane skeleton, polyester skeleton, polyamide skeleton, polyimide skeleton, polyoxyalkylene skeleton and polyphenylene skeleton, and there are preferred polyethylene skeleton and polyurethane skeleton. As the photo-polymerizing group, there can be mentioned, for example, (meth) acryloyl group, alkenyl group, cinnamoyl group, cinnamylideneacetyl group, benzalacetophenone group, styrylpyridine group, $\alpha$-phenylmaleimide group, phenylazide group, sulfonylazide group, carbonylazide group, diazo group, o-quinonediazide group, furylacryloyl group, coumarin group, pyrone group, anthracene group, benzophenone group, benzoin group, stilbene group, dithiocarbamate group, xanthate group, 1,2,3-thiadiazole group, cyclopropene group and azadioxabicyclo group.

Preferred photo-polymerizing groups are (meth)acryloyl group and cinnamoyl group and particularly preferred is (meth) acryloyl group.

As the photo-sensitive resin precursor (photo-polymerizing unsaturated monomer), there can be mentioned, for example, vinyl aromatic compounds such as styrene, $\alpha$-methylstyrene, o-methylstyrene, m-methylstyrene, p-methylstyrene, p-tert-butylstyrene, divinylbenzene, diisopropenylbenzene, o-chlorostyrene, m-chlorostyrene, p-chlorostyrene, 1,1-diphenylethylene, p-methoxystyrene, N,N-dimethyl-p-aminostyrene, N,N-diethyl-p-aminostyrene, vinylpyridine and the like; unsaturated nitriles such as (meth)acrylonitrile, $\alpha$-chloroacrylonitrile, $\alpha$-chloromethylacrylonitrile, $\alpha$-methoxyacrylonitrile, $\alpha$-ethoxyacylonitrile, crotonic acid nitrile, cinnamic acid nitrile, itaconic acid dinitrile, maleic acid dinitrile, fumaric acid dinitrile and the like; (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-amyl (meth)acrylate, n-octyl (meth)acrylate, 2-ethylhexyl (meth)acrylate, lauryl (meth)acrylate, stearyl (meth)acrylate, 2-methoxyethyl (meth)acrylate, 2-ethoxyethyl (meth)acrylate, 2-(n-propoxy)ethyl (meth)acrylate and the like; fluorine-containing (meth)acrylic acid esters such as 2,2,2-trifluoroethyl (meth)acrylate, 2,2,3,3,3-pentafluoropropyl (meth)acrylate, 2-(perfluorobutyl)ethyl (meth)acrylate, 2-(perfluorohexyl)ethyl (meth)acrylate, 2-(perfluorooctyl) ethyl (meth)acrylate, 2-(perfluorodecyl)ethyl (meth)acrylate and the like; unsaturated carboxylic acid esters such as methyl crotonate, ethyl crotonate, propyl crotonate, butyl crotonate, methyl cinnamate, ethyl cinnamate, propyl cinnamate, butyl cinnamate and the like; hydroxyl group-containing (meth)acrylic acid esters such as 2-hydroxyethyl (meth)acrylate, 2-hydroxypropyl (meth)acrylate, 3-hydroxypropyl (meth)acrylate and the like; (meth)acrylic acid monoesters of polyalkylene glycols such as polyethylene glycol, polypropylene glycol and the like; cyano group-containing (meth)acrylic acid esters such as cyanoethyl (meth)acrylate, cyanopropyl (meth)acrylate and the like; aryloxyalkyl esters of (meth) acrylic acid, such as 2-phenoxyethyl (meth)acrylate, 2-phenoxypropyl (meth)acrylate, 3-phenoxypropyl (meth)acrylate and the like; (meth)acrylic acid monoesters of alkoxypolyalkylene glycols such as methoxypolyethylene glycol, ethoxypolyethylene glycol, methoxypolypropylene glycol, ethoxypolypropylene glycol and the like; (meth)acrylic acid monoesters of aryloxypolyalkylene glycols such as phenoxypolyethylene glycol, phenoxypolypropylene glycol and the like; (meth)acrylic acid diesters of alkylene glycols such as ethylene glycol, propylene glycol, 1,4-butanediol, 1,5-pentanediol, 1,6-hexanediol, neopentyl glycol and the like; (meth)acrylic acid diesters of two-terminal hydroxy polymers such as polyalkylene glycol (e.g. polyethylene glycol and polypropylene glycol, and the number of alkylene glycol units is, for example, 2 to 23), two-terminal hydroxy polybutadiene, two-terminal hydroxy polyisoprene, two-terminal hydroxy butadiene-acrylonitrile copolymer, two-terminal hydroxy polycaprolactone and the like; (meth)acrylic acid oligoesters (e.g. diester, triester and tetraester) of tri- or higher alcohols such as glycerine, 1,2,4-butanetriol, trimethylolalkane (the carbon atom(s) of alkane is (are), for example, 1 to 3), tetramethylolalkane (the carbon atom(s) of alkane is (are), for example, 1 to 3), pentaerythritol and the like; (meth)acrylic acid oligoesters such as (meth)acrylic acid tri- or tetraester of polyalkylene glycol adduct of tri- or higher valent alcohol; (meth)acrylic acid oligoesters of cyclic polyvalent alcohols such as 1,4-cyclohexanediol, 1,4-benzenediol, 1,4-dihydroxyethylbenzene and the like; (meth)acrylic acid oligoester prepolymers such as polyester (meth)acrylate, epoxy (meth)acrylate, urethane (meth)acrylate, alkyd resin (meth)acrylate, silicone resin (meth)acrylate, spiran resin (meth)acrylate and the like; unsaturated carboxylic acids such as (meth)acrylic acid, crotonic acid, cinnamic acid, itaconic acid, itaconic anhydride, maleic acid, maleic anhydride, fumaric acid, citraconic acid, mesaconic acid and the like; free carboxyl group-containing esters such as monomethyl esters, monoethyl esters, monopropyl esters, monobutyl esters, monohexyl esters or monooctyl esters of unsaturated polycarboxylic acids (e.g. itaconic acid, maleic acid, fumaric acid, citraconic acid and mesaconic acid); polycarboxylic acid esters such as dimethyl esters, diethyl esters, dipropyl esters, dibutyl esters, dihexyl esters or dioctyl esters of unsaturated polycarboxylic acids (e.g. itaconic acid, maleic acid, fumaric acid, citraconic acid and mesaconic acid); unsaturated amides such as (meth) acrylamide, N-hydroxymethyl (meth)acrylamide, N-(2-hydroxyethyl) (meth)acrylamide, N,N-bis-(2-hydroxyethyl) (meth) acrylamide, N,N'-methylene-bis-(meth)acrylamide, N,N'-ethylene-bis-(meth)acrylamide, N,N'-hexamethylene-bis-(meth)acrylamide, crotonic acid amide, cinnamic acid amide and the like; and carboxylic acid vinyl esters such as vinyl acetate, vinyl propionate, vinyl butyrate, vinyl pivalate, vinyl caproate, vinyl versatate, vinyl stearate and the like. In particular, fluorine-containing (meth)acrylic acid esters are used suitably in order to obtain an optical article of low refractive index.

The photo-sensitive resin precursor (photo-polymerizing unsaturated monomer) includes substances included in the reactive diluent (B1). Therefore, when there is added, to the organic solvent (B2), a photo-sensitive resin precursor (photo-polymerizing unsaturated monomer) as the resin (D), the constitution of the resulting mixture may be the same as when there is used a mixture of the organic solvent (B2) and the reactive diluent (B1).

To the hollow particles-containing liquid composition containing a photo-sensitive resin is as necessary added a photo-polymerization initiator.

As the photo-polymerization initiator, there can be mentioned, for example, $\alpha$-diketone compounds such as diacetyl, methylbenzoyl formate, benzyl and the like; acyloins such as benzoin, pivaloin and the like; acyloin ethers such as benzoin methyl ether, benzoin ethyl ether, benzoin isopropyl ether, benzoin butyl ether and the like; polynuclear quinones such as anthraquinone, 2-ethylanthraquinone, 2-tert-butylanthraquinone, 1,4-naphthoquinone and the like; acetophenones such as acetophenone, 2-hydroxy-2-methyl-propiophenone, 1-hydroxycyclohexylphenylketone, 2,2-dimethoxyphenylacetophenone, 2,2-diethoxyacetophenone, trichloroacetophenone and the like; benzophenones such as benzophenone, methyl-o-benzoyl benzoate, Michler's ketone and the like; and xanthones such as xanthone, thioxanthone, 2-chlorothioxanthone and the like.

The use amount of the photo-polymerization initiator is 0.1 to 20 parts by mass, preferably 0.5 to 10 parts by mass relative to 100 parts by mass of the photo-sensitive resin. When the use amount of the photo-polymerization initiator is in the above range, the photo-curing of the photo-sensitive resin proceeds sufficiently.

To the hollow particles-containing liquid composition containing a photo-sensitive resin, according to the present embodiment, can be as necessary added various additives such as thermal addition polymerization inhibitor (this acts as a storage stabilizer) and the like, in such an amount that the properties of the liquid composition are not impaired. As the thermal addition polymerization inhibitor, there can be mentioned, for example, hydroxyaromatic compounds such as hydroquinone, hydroquinone monomethyl ether, mono-tert-butylhydroquinone, catechol, p-tert-butylcatechol, p-methoxyphenol, p-tert-butylcatechol, 2,6-di-tert-butyl-m-cresol, pyrogallol, $\beta$-naphthol and the like; quinones such as benzoquinone, 2,5-diphenyl-p-benzoquinone, p-toluquinone, p-xyloquinone and the like; nitro or nitroso compounds such as nitrobenzene, m-dinitrobenzene, 2-methyl-2-nitrosopropane, $\alpha$-phenyl-tert-butylnitron, 5,5-dimethyl-1-pyrolline-1-oxide and the like; amines such as chloranil-amine, diphenylamine, diphenylpicrylhydrazine, phenol-$\alpha$-naphthylamine, pyridine, phenothiazine and the like; sulfides such as dithiobenzoyl sulfide, dibenzyl tetrasulfide and the like; unsaturated compounds such as 1,1-diphenylethylene, $\alpha$-methylthioacrylonitrile and the like; thiazine dyes such as Thionine Blue, Toluidine Blue, Methylene Blue and the like; and stable radicals such as 1,1-diphenyl-2-picrylhydrazyl, 1,3,5-triphenylferdazyl, 4-hydroxy-2,2,6,6-tetramethylpiperidine-1-oxyl, 2,6-di-tert-butyl-$\alpha$-(3,5-di-tert-butyl)-4-oxo-2,5-cyclohexadiene-1-ylidene-p-trioxyl and the like. The use amount of the thermal addition polymerization inhibitor is 0.001 to 2.0 mass % in 100 mass % of the hollow particles-containing liquid composition containing a photo-sensitive resin.

The ratio of the photo-sensitive resin and the crosslinked hollow particles (A) is the same as that of the thermosetting resin and the crosslinked hollow particles (A). The thus-produced, hollow particles-containing liquid composition containing a photo-sensitive resin can be cured by applying thereto an actinic ray such as ultraviolet radiation or the like.

Next, description is made on an embodiment of the optical article of the present invention. The optical article of the present embodiment comprises a transparent substrate and a dried film formed thereon, of the hollow particles-containing liquid composition of the present invention. The dried film of the hollow particles-containing liquid composition is obtained by coating a hollow particles-containing liquid composition on a transparent substrate and drying it.

As the transparent substrate of the optical article of the present embodiment, there can be mentioned inorganic glass, transparent plastic plate of polyester resin (e.g. polyethylene terephthalate or polyethylene naphthalate), polycarbonate resin, acrylic resin, styryl resin, arylate resin, norbornene resin, triacetyl cellulose or the like; film; and so forth. Preferred are inorganic glass, polyethylene terephthalate resin, polycarbonate resin, acrylic resin and triacetyl cellulose resin.

In the process for producing an optical article of the present embodiment, a hollow particles-containing liquid composition of the present invention is coated on a transparent substrate in a film state and dried, whereby is obtained an optical article comprising a transparent substrate and a dried film formed thereon, of a hollow particles-containing liquid composition.

The coating of a hollow particles-containing liquid composition on a transparent substrate is conducted by using a roll coater, a centrifugal coater, an ultrasonic coater, a (micro)gravure coater or the like, or by dip coating, flow coating, spraying, a screen process or the like. Preferably, a roll coater or a (micro)gravure coater is used.

The film thickness after a hollow particles-containing liquid composition has been coated on a transparent substrate, is preferably 1 to 500 $\mu$m, more preferably 5 to 100 $\mu$m. When the film thickness is less than 1 $\mu$m, a low

haze may result; when the film thickness is more than 500 $\mu$m, the film may crack easily.

Examples

The present invention is described more specifically below by way of Examples. However, the present invention is in no way restricted by the Examples. Incidentally, in the following description, "parts" and "%" are parts by mass and mass % unless otherwise specified. In Examples and Comparative Examples, mass was measured in a nitrogen atmosphere in all cases.

The particle diameters and pore diameters of polymer particles are each an average of the measurements conducted for randomly selected 100 particles, in an observation using an electron microscope.

Foreign matter was evaluated by observing each 10-cm area of produced 10 same optical articles using a 20-magnification microscope, to count the number of foreign matter in each area, calculating the average of the numbers per area, and rating it based on the following standard. The results are shown in Tables 1 and 2.

◎: No foreign matter is seen.
○: The average number of foreign matter is 1 to 2.
△: The average number of foreign matter is 3 to 10.
X: The average number of foreign matter is more than 10.

Haze was evaluated by the haze measured for a produced optical article using Haze Guard II (a product of Gardner Co.). The results are shown in Tables 1 and 2.

[Preparation of aqueous dispersion of seed particles]

An example of preparation of an aqueous dispersion of seed particles is shown below. Into a reactor of 2 liters in capacity were fed 109.5 parts of water (as a medium), 0.2 part of sodium dodecylbenzenesulfonate (trade name: F65, a product of Kao Corporation) (as an emulsifier) and 0.5 part of sodium persulfate (as a polymerization initiator). Separately, 90 parts of methyl methacrylate, 10 parts of methacrylic acid, 2.5 parts of octyl thioglycol (as a molecular weight modifier), 0.1 part of an emulsifier (trade name: F65, a product of Kao Corporation) and 40 parts of water were mixed with stirring, to prepare an aqueous dispersion of a monomer mixture. 20% of this aqueous dispersion of a monomer mixture was added into the above-mentioned reactor; the temperature of the resulting mixture was elevated to 75°C with stirring, to conduct a polymerization reaction for 1 hour; then, while the temperature was being kept at 75°C, the remaining portion of the aqueous dispersion of a monomer mixture was added into the reactor continuously in 2 hours; aging was conducted for 2 hours to obtain an aqueous dispersion of seed particles having a solid content of 40%, a particle diameter of 0.2 $\mu$m and a weight-average molecular weight of 15,000.

(Production of aqueous dispersion iii or iii' of crosslinked hollow polymer particles)

Examples of production of aqueous dispersion iii or iii' of crosslinked hollow polymer particles are shown below by Production Example 1 or Comparative Production Example 1.

(Production Example 1: production of aqueous dispersion iii of crosslinked hollow polymer particles)

186 parts of water (as a medium) was fed into a reactor of 2 liters in capacity. Thereinto were fed 10 parts (as solid content) (25 parts as aqueous dispersion) of the aqueous dispersion of seed particles prepared in the above [0109] and 0.5 part of sodium persulfate (as a polymerization initiator). Separately, 79.5 parts of methyl methacrylate, 20 parts of methacrylic acid, 0.5 part of divinylbenzene (purity: 81%), 3 parts of octyl thioglycol, 0.1 part of an emulsifier (trade name: F65, a product of Kao Corporation) and 40 parts of water were mixed with stirring, to prepare an aqueous dispersion of a monomer mixture. Then, the temperature of the liquid in the reactor was elevated to 80°C with stirring and kept at that level; into the reactor was fed the above-prepared aqueous dispersion of a monomer mixture continuously in 3 hours. Thereafter, aging was conducted for 2 hours to obtain an aqueous dispersion of first polymer particles (i-1) having a solid content of 31% and a particle diameter of 0.41 $\mu$m.

240 parts of water (as a medium) was fed into a reactor of 2 liters in capacity. Thereinto were fed 15 parts (as solid content) (48.4 parts as aqueous dispersion) of the above-prepared aqueous dispersion of first polymer particles (i-1), 20 parts of styrene and 0.4 part of sodium persulfate (as a polymerization initiator). The temperature of the liquid in the reactor was elevated to 80°C with stirring and kept at that level to polymerize styrene in 30 minutes to obtain polymer particles which were a composite of the first polymer particles (i-1) and a styrene polymer. Separately, 56.5 parts of styrene, 3 parts of ethylene glycol dimethacrylate, 0.1 part of an emulsifier (trade name: F65, a product of Kao Corporation) and 40 parts of water were mixed with stirring, to prepare an aqueous dispersion of a second polymerizing monomer. The liquid in the above-mentioned reactor was kept at 80˚C with stirring and the aqueous dispersion of a second polymerizing monomer (b) was fed into the reactor continuously in 4 hours. At that time, when 2 hours passed after the start of feeding of the aqueous dispersion of a second polymerizing monomer (b), 0.5 part of acrylic acid was fed into the reactor in one portion to copolymerize it with styrene. When all the aqueous dispersion of a second polymerizing monomer (b) was fed into the reactor, 20 parts of divinylbenzene (purity: 81%) was fed in one portion to obtain core-shell polymer particles (ii-1) wherein styrene, acrylic acid, ethylene glycol dimethacrylate and divinylbenzene had been polymerized in layers on the surface of the first polymer particles (i-1). About 15 minutes after the feeding of all the second polymerizing monomer (b), 5 parts of a 20% aqueous ammonia solution was added in one portion, with stirring; the system temperature was elevated to 90˚C; and aging was conducted for 2 hours with stirring. The mass ratio of the unreacted second polymerizing monomer (b) to the total second polymerizing monomer (b), right before the feeding of the 20% aqueous ammonia solution was 6%. Then, 0.3 part of tert-butyl hydroperoxide and 0.1 part of a formaldehyde resin were added and the resulting mixture was allowed to stand for 1 hour with stirring, to obtain an aqueous dispersion (iii-1) of spherical, crosslinked, hollow polymer particles having a solid content of 26.5%, a particle diameter of 1.1 $\mu$m, an inner diameter of 0.9 $\mu$m, a hollow portion volume ratio of 55% and a single pore.

(Comparative Production Example 1: production of aqueous dispersion iii' of crosslinked hollow polymer particles)

Into a flask of 2 liters in capacity were fed 80 parts of styrene, 5 parts of methacrylic acid, 15 parts of methyl methacrylate, 15 parts of tert-dodecylmethylmercaptan, 0.8 part of sodium dodecylbenzenesulfonate, 1.0 part of potassium persulfate and 200 parts of water. The temperature of the resulting mixture was elevated to 80˚C in a nitrogen gas with stirring and emulsion polymerization was conducted for 6 hours, to obtain polymer particles having an average particle diameter of 0.15 $\mu$m and a weight-average molecular weight of 3,500, at a polymerization yield of 98%. There were fed 10 parts (as solid content) of the polymer particles, 0.3 part of sodium lauryl sulfate, 0.5 part of potassium persulfate and 400 parts of water. Thereto was added a monomer composition composed of 20 parts of divinylbenzene (purity: 55 mass %), 5 parts of acrylic acid and 75 parts of methyl methacrylate. The resulting mixture was stirred at 30˚C for 1 hour and then at 70˚C for 5 hours to give rise to emulsion polymerization. By completion of the polymerization, there was obtained an aqueous dispersion (iii'-1) of spherical, crosslinked, hollow polymer particles having a solid content of 20.5%, a particle diameter of 0.35 $\mu$m, an inner diameter of 0.2 $\mu$m, a hollow portion volume ratio of 19% and a single pore.

(Comparative Production Example 2: production of non-crosslinked hollow polymer particles)

186 parts of water (as a medium) was fed into a reactor of 2 liters in capacity. Thereinto were fed 10 parts (as solid content) (25 parts as aqueous dispersion) of the aqueous dispersion of seed particles prepared in the above [0109] and 0.5 part of sodium persulfate (as a polymerization initiator). Separately, 80 parts of methyl methacrylate, 20 parts of methacrylic acid, 3 parts of octyl thioglycol, 0.1 part of an emulsifier (trade name: F65, a product of Kao Corporation) and 40 parts of water were mixed with stirring, to prepare an aqueous dispersion of a monomer mixture. Then, the temperature of the liquid in the reactor was elevated to 80˚C with stirring and kept at that level; into the reactor was fed the above-prepared aqueous dispersion of a monomer mixture continuously in 3 hours. Thereafter, aging was conducted for 2 hours to obtain an aqueous dispersion of first polymer particles (i'-1) having a solid content of 31% and a particle diameter of 0.42 $\mu$m.
240 parts of water (as a medium) was fed into a reactor of 2 liters in capacity. Thereinto were fed 15 parts (as solid content) (48. parts as aqueous dispersion) of the above-prepared aqueous dispersion of first polymer particles (i'-1), 20 parts of styrene and 0.4 part of sodium persulfate (as a polymerization initiator). The temperature of the liquid in the reactor was elevated to 80˚C with stirring and kept at that level to polymerize styrene in 30 minutes to obtain polymer particles which were a composite of the first polymer particles (i'-1) and a styrene polymer. Separately, 59.5 parts of styrene, 0.1 part of an emulsifier (trade name: F65, a product of Kao Corporation) and 40 parts of water were mixed with stirring, to prepare an aqueous dispersion of a second polymerizing monomer (b). The liquid in the above-mentioned reactor was kept at 80˚C with stirring and the aqueous dispersion of a second polymerizing monomer (b) was fed into the reactor continuously in 4 hours. At that time, when 2 hours passed after the start of feeding of the aqueous dispersion of a second polymerizing monomer (b), 0.5 part of acrylic acid was fed into the reactor in one portion to copolymerize it with styrene. When all the aqueous dispersion of a second polymerizing monomer (b) was fed into the reactor, 20 parts of styrene was fed in one portion to obtain core-shell polymer particles (ii'-1) wherein styrene and acrylic acid had been polymerized in layers on the surface of the first polymer particles (i'-1). About 15 minutes after the feeding of all the monomers, 5 parts of a 20% aqueous ammonia solution was added in one portion, with stirring; the system temperature was elevated to 90˚C; and aging was conducted for 2 hours with stirring. The mass ratio of the unreacted second polymerizing monomer (b) to the total second polymerizing monomer (b), right before the feeding of the 20% aqueous ammonia solution was 7%. Then, 0.3 part of tert-butyl hydroperoxide and 0.1 part of a formaldehyde resin were added and the resulting mixture was allowed to stand for 1 hour with stirring, to obtain an aqueous dispersion (ii''-1) of spherical, non-crosslinked, hollow polymer particles having a solid content of 26.5%, a particle diameter of 1.1 $\mu$m, an inner diameter of 0.9 $\mu$m, a hollow portion volume ratio of 55% and a single pore.

(Production of hollow particles-containing liquid compositions and optical articles)

Production Examples of hollow particles-containing liquid compositions and optical articles are shown by the following Examples 1 to 7 and Comparative Examples 1 to 3.

(Example 1)

The aqueous dispersion (iii-1) of crosslinked hollow polymer particles obtained in the above Production Example 1 was dried using a spray drier produced by Ohkawara Kakoki (Pilot Series L-12 Model) to obtain crosslinked hollow particles (A-1). 5 parts of the crosslinked hollow particles (A-1) were dispersed in 95 parts of cyclohexanone using an ultrasonic dispersing machine to obtain a hollow particles-containing liquid composition X-1. Into 100 parts of the hollow particles-containing liquid composition X-1 was mixed 5 parts of a polymethyl methacrylate as a resin to obtain a hollow particles-containing composition containing a resin. This composition was coated on a 100-$\mu$m PET film using an applicator, followed by drying at 100˚C, to obtain an optical article Y-1 having a light-scattering layer of 30 $\mu$m in thickness.

(Example 2)

15 parts of LATEMUL PD-104 (a product of Kao Corporation) as a component (C) was added to 100 parts (as solid content) of the aqueous dispersion (iii-1) of crosslinked hollow polymer particles obtained in the Production Example 1. Then, the same operation as in Example 1 was conducted to obtain a hollow particles-containing liquid composition X-2 (dispersed in cyclohexanone) and an optical article Y-2.

(Example 3)

5 parts (as solid content) of the aqueous dispersion (iii-1) of crosslinked hollow polymer particles obtained in the Production Example 1 was mixed with 95 parts of cyclohexanone. Water in the aqueous dispersion was distilled off using a 10-liter evaporator type concentrator, to obtain a hollow particles-containing liquid composition X-3 (dispersed in cyclohexanone). Using this hollow particles-containing liquid composition X-3, an optical article Y-3 was obtained in the same operation as in Example 1.

(Example 4)

5 parts (as solid content) of the aqueous dispersion (iii-1) of crosslinked hollow polymer particles obtained in the Production Example 1 was mixed with 95 parts of ethyl cellosolve. Water in the aqueous dispersion was distilled off using a 10-liter evaporator type concentrator, to obtain a hollow particles-containing liquid composition X-4 (dispersed in ethyl cellosolve). Using this hollow particles-containing liquid composition X-4, an optical article Y-4 was obtained in the same operation as in Example 1.

(Example 5)

5 parts (as solid content) of the aqueous dispersion (iii-1) of crosslinked hollow polymer particles obtained in the Production Example 1 was mixed with 95 parts of ethyl lactate. Water in the aqueous dispersion was distilled off using a 10-liter evaporator type concentrator, to obtain a hollow particles-containing liquid composition X-5 (dispersed in ethyl lactate). Using this hollow particles-containing liquid composition X-5, an optical article Y-5 was obtained in the same operation as in Example 1.

(Example 6)

An optical article Y-6 was obtained in the same operation as in Example 5 except that there were used, as a resin, a melamine resin (CYMEL 303, a product of Mitsui Cytec Ltd.) and, as a curing catalyst, CAT 4050 (a product of Mitsui Cytec Ltd.).

(Example 7)

An optical article Y-7 was obtained in the same operation as in Example 5 except that there were used, as a resin, dipentaerythritol hexa-acrylate and, as a photo-polymerization initiator, Irgacure 907 (a product of Ciba Specialties Chemicals).

(Comparative Example 1)

A hollow particles-containing liquid composition X'-1 and an optical article Y'-1 were obtained in the same operation as in Example 1 except that there were used the non-crosslinked hollow polymer particles (iii"-1) obtained in the Comparative Production Example 2.

(Comparative Example 2)

A hollow particles-containing liquid composition X'-2 and an optical article Y'-2 were obtained in the same operation as in Example 1 except that there was used the aqueous dispersion (iii'-1) of crosslinked hollow polymer particles obtained in the Comparative Production Example 1.

(Comparative Example 3)

A hollow particles-containing liquid composition X'-3 and an optical article Y'-3 were obtained in the same operation as in Example 4 except that there was used the aqueous dispersion (iii'-1) of crosslinked hollow polymer particles obtained in the Comparative Production Example 1.

The evaluation results of the optical articles obtained in Examples 1 to 7 and Comparative Examples 1 to 3 are shown in Tables 1 and 2. In Table 1 and 2, "dispersion" means an aqueous dispersion of crosslinked hollow polymer particles, or non-crosslinked hollow polymer particles; "production method" means a method for producing a hollow particles-containing liquid composition and is a method for dispersing crosslinked hollow particles in an organic solvent; and "component (C)" means a particular dispersing agent (C) represented by the above-mentioned formula (1).

Table 1

| | Example 1 | Example 2 | Example 3 | Example 4 | Example 5 | Example 6 | Example 7 |
|---|---|---|---|---|---|---|---|
| Dispersion | iii-1 | iii-1 | iii-1 | iii-1 | iii-1 | iii-1 | iii-1 |
| Toluene insoluble | 92% | 92% | 92% | 92% | 92% | 92% | 92% |
| Production method | Redispersion method | Redispersion method | Replacement-with-solvent method | Replacement-with-solvent method | Replacement-with-solvent method | Redispersion method | Redispersion method |
| Component (C) | Not used | Used | Not used | Not used | Not used | Not used | Not used |
| Organic solvent (solubility in water) | Cyclohexanone (water-insoluble) | Cyclohexanone (water-insoluble) | Cyclohexanone (water-insoluble) | Ethyl cellosolve (water-soluble) | Ethyl lactate (water-soluble) | Cyclohexanone (water-insoluble) | Cyclohexanone (water-insoluble) |
| resin | Thermoplastic | Thermoplastic | Thermoplastic | Thermoplastic | Thermoplastic | Thermosetting | Photo-sensitive |
| Foreign matter | △ | ○ | △ | ○ | ◎ | △ | △ |
| Haze value | 72% | 74% | 72% | 76% | 78% | 71% | 73% |

Table 2

|  | Comparative Example 1 | Comparative Example2 | Comparative Example 3 |
|---|---|---|---|
| Dispersion | iii"-1 | iii'-1 | iii'-1 |
| Toluene insoluble | 2% | 96% | 96% |
| Production method | Redispersion method | Redispersion method | Redispersion method |
| Component (C) | Not used | Not used | Not used |
| Organic solvent (solubility in water) | Cyclohexanone (water-insoluble) | Cyclohexanone (water-insoluble) | Ethyl cellosolve (water-soluble) |
| Resin | Thermoplastic | Thermoplastic | Thermoplastic |
| Foreign matter | X | X | X |
| Haze value | 4% | 38% | 39% |

In Examples 1 to 7, the foreign matter content is low and the haze value is high at 70% or more. Meanwhile, in Comparative Example 1, the hollow polymer particles (iii"-1) used are not crosslinked and accordingly the haze value is extremely low and, moreover, the foreign matter amount is large. In Comparative Examples 2 and 3, there was used an aqueous dispersion (iii'-1) of crosslinked, hollow polymer particles and accordingly the haze value was 30% or higher; however, the small particle diameters resulted in generation of a large amount of foreign matter.

Industrial Applicability

The hollow particles-containing liquid composition of the present invention can be used for production of an optical article having an incident light-scattering surface, or as a light-scattering material or an auxiliary material for light scattering, both used in coating of the surface of paper, fiber, leather or the like. The optical article of the present invention can be used as a light-scattering sheet used in back light unit of liquid crystal display, a focussing glass of camera, a cover for illumination, and a frosted glass-like light-scattering resin plate used in window or door of, for example, bath room.

**Claims**

1. A hollow particles-containing liquid composition which comprises:

(A) crosslinked hollow particles having particle diameters of 0.4 $\mu$m or more and containing 40 mass % or more of a toluene insoluble, in an amount of 5 to 70 mass %,
(B) a reactive diluent (B1) and/or an organic solvent (B2) in an amount of 95 to 30 mass % [the total mass of the crosslinked hollow particles (A) and the reactive diluent (B1) and/or the organic solvent (B2) is 100 mass %], and
(C) a dispersing agent in an amount of 0 to 30 parts by mass relative to 100 parts by mass of the total of the crosslinked hollow particles (A) and the reactive diluent (B1) and/or the organic solvent (B2).

2. A hollow particles-containing liquid composition according to Claim 1, which further comprises:

(D) a resin in an amount of 0.2 to 1,000 parts by mass relative to 100 parts by mass of the crosslinked hollow particles (A).

3. A hollow particles-containing liquid composition according to Claim 2, wherein the resin (D) is at least one kind selected from the group consisting of thermosetting resins, thermoplastic resins and photo-setting resins.

4. A hollow particles-containing liquid composition according to any of Claims 1 to 3, wherein the crosslinked hollow particles (A) have outer diameters of 0.4 to 5 $\mu$m.

5. A hollow particles-containing liquid composition according to any of Claims 1 to 4, wherein the dispersing agent (C) is a compound represented by the following formula (1) :

$$T^1O\text{-}(RO)_n(EO)_m\text{-}T^2 \qquad (1)$$

($T^1$ is a hydrogen atom, an alkyl group of 1 to 18 carbon atoms or an alkenyl group of 2 to 18 carbon atoms; $T^2$ is a hydrogen atom, a sulfonic acid (sulfonic acid salt) group, a carboxylic acid (carboxylic acid salt) group, a phosphoric acid (phosphoric acid salt) group, an amino group or an ammonium group; RO is an oxyalkylene group of 3 to 18 carbon atoms; EO is an oxyethylene group; n is an integer of 1 to 50; m is an integer of 0 to 200; n RO groups are the same kind or different plural kinds; and n RO groups and m EO groups are bonded to each other by block bonding or random bonding).

6. A hollow particles-containing liquid composition according to any of Claims 1 to 5, wherein the organic solvent (B2) is at least one kind selected from the group consisting of water-soluble amines, water-soluble glycol ethers, water-soluble ketones and water-soluble esters.

7. A hollow particles-containing liquid composition according to any of Claims 1 to 6, which gives a haze of 30% or more when made into a dried film having a thickness of 30 $\mu$m.

8. A process for producing an aqueous dispersion of crosslinked hollow polymer particles, which comprises:

   a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),
   a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b), and
   a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles.

9. A process for producing a hollow particles-containing liquid composition, which comprises:

   a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),
   a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b),
   a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles, and
   a step of drying the aqueous dispersion (iii) of crosslinked hollow polymer particles and re-dispersing the dried material in a reactive diluent (B1-1) and/or an organic solvent (B2-1) to obtain a hollow particles-containing liquid composition.

10. A process for producing a hollow particles-containing liquid composition, which comprises:

a step of emulsion-polymerizing, in an aqueous medium, a first polymerizing monomer (a) composed of 5 to 80 mass % of an unsaturated carboxylic acid (a-1) and 20 95 mass % of other radical-polymerizing monomer (a-2) copolymerizable with the unsaturated carboxylic acid (a-1) [the total of the unsaturated carboxylic acid (a-1) and the other radical-polymerizing monomer (a-2) is 100 mass %] to obtain a dispersion of first polymer particles (i),
a step of emulsion-polymerizing, in an aqueous medium in the presence of 5 to 1,000 parts by mass of the first polymer particles (i), a second polymerizing monomer (b) composed of 10 to 80 mass % of a crosslinkable radical-polymerizing monomer (b-1), 0 to 20 mass % of an unsaturated carboxylic acid (b-2) and 0 to 90 mass % of other radical-polymerizing monomer (b-3) copolymerizable with the crosslinkable radical-polymerizing monomer (b-1) [the total of the crosslinkable radical-polymerizing monomer (b-1), the unsaturated carboxylic acid (b-2) and the other radical-polymerizing monomer (b-3) is 100 mass %] to obtain a dispersion of core-shell polymer particles (ii) wherein each surface layer of the first polymer particles (i) is covered with a shell layer containing a second polymer derived from the second polymerizing monomer (b) and the unreacted second polymerizing monomer (b),
a step of adjusting the pH of the dispersion of the core-shell polymer particles (ii) with a volatile base to 7 or more to neutralize and swell the core-shell polymer particles (ii) and then polymerizing the unreacted second polymerizing monomer (b) to obtain an aqueous dispersion (iii) of crosslinked hollow polymer particles, and
a step of adding, to the aqueous dispersion (iii) of crosslinked hollow polymer particles, a reactive diluent (B1-1) and/or an organic solvent (B2-1) and then removing water to obtain a hollow particles-containing liquid composition.

11. An optical article comprising a transparent substrate and a dried film of a hollow particles-containing liquid composition set forth in any of Claims 1 to 7, formed on the surface of the transparent substrate.

12. An optical article according to Claim 11, wherein the transparent substrate is at least one kind selected from the group consisting of glass, polyethylene terephthalate resin, polycarbonate resin, acrylic resin, triacetyl cellulose resin and norbornene-based resin.

**EP 1 710 278 A1**

| **INTERNATIONAL SEARCH REPORT** | International application No. |
|---|---|
| | PCT/JP2005/000901 |

**A. CLASSIFICATION OF SUBJECT MATTER**
Int.Cl$^7$  C08L101/00, B05D5/06, C08F265/02, G02B5/02

According to International Patent Classification (IPC) or to both national classification and IPC

**B. FIELDS SEARCHED**

Minimum documentation searched (classification system followed by classification symbols)
Int.Cl$^7$  C08L101/00, B05D5/06, C08F265/02, G02B5/02

Documentation searched other than minimum documentation to the extent that such documents are included in the fields searched
Jitsuyo Shinan Koho          1926-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 02-140272 A  (Japan Synthetic Rubber Co., Ltd.),<br>29 May, 1990 (29.05.90),<br>Claims; page 12, lower right column, line 8 to page 13, upper left column, line 19; page 14, lower left column, line 19 to page 15, upper left column, line 1; page 16, upper left column, line 13 to upper right column, the last line; page 16, lower right column, lines 4 to 16; page 29, table 4; page 35, table 11<br>(Family: none) | 1-4,6,7<br>5,8-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 March, 2005 (08.03.05) | 22 March, 2005 (22.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

25

**INTERNATIONAL SEARCH REPORT**

| International application No. |
| --- |
| PCT/JP2005/000901 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 56-032513 A (Rohm and Haas Co.),<br>02 April, 1981 (02.04.81),<br>Claims; page 11, upper right column, line 6 to<br>page 12, upper left column, line 1<br>& EP 22633 A2<br>Page 23, line 11 to page 24, the last line<br>& AU 8430524 A    & CA 1180474 A<br>& DE 3070204 G    & US 4427836 A | 1-12 |
| Y | JP 04-279637 A (Japan Synthetic Rubber Co.,<br>Ltd.),<br>05 October, 1992 (05.10.92),<br>Claims; page 5, Par. Nos. [0021] to [0022];<br>page 6, Par. Nos. [0026] to [0028]; page 12,<br>table 5<br>(Family: none) | 1-12 |
| Y | JP 62-127336 A (Japan Synthetic Rubber Co.,<br>Ltd.),<br>09 June, 1987 (09.06.87),<br>Claims; page 4, upper left column, line 10 to<br>upper right column, line 6; page 6, upper left<br>column, line 3 to upper right column, line 9;<br>page 6, lower right column, the last line to<br>page 7, upper right column, line 16; page 8,<br>upper right column, lines 1 to 15; page 15,<br>upper left column, line 17 to lower left column,<br>line 8<br>(Family: none) | 1-12 |
| Y | JP 02-092939 A (Japan Synthetic Rubber Co.,<br>Ltd.),<br>03 April, 1990 (03.04.90),<br>Claims; page 10, upper right column, line 1 to<br>lower left column, line 13; page 12, upper left<br>column, line 12 to lower left column, line 5;<br>page 13, lower left column, line 7 to lower<br>right column, line 16; page 14, upper left<br>column, line 19 to lower left column, line 5;<br>page 23, table 4<br>& EP 331421 A2<br>Page 10, lines 19 to 33; page 12, lines 42 to<br>58; page 14, lines 44 to 58; page 15, lines<br>26 to 44; page 16, lines 9 to 33<br>& CA 1303437 C    & US 4972000 A | 1-12 |
| Y | JP 2000-345191 A (Kao Corp.),<br>12 December, 2000 (12.12.00),<br>Claims<br>(Family: none) | 5 |

Form PCT/ISA/210 (continuation of second sheet) (January 2004)

**INTERNATIONAL SEARCH REPORT**

International application No.

PCT/JP2005/000901

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-088104 A  (Kao Corp.),<br>27 March, 2002 (27.03.02),<br>Claims<br>(Family: none) | 5 |
| Y | WO 2002/064637 A1  (CLARIANT GMBH),<br>22 August, 2002 (22.08.02),<br>Claims<br>& JP 2004-531592 A        & BR 200207074 A<br>& DE 10106145 A1        & EP 1368383 A1<br>& US 2004/0077774 A1 | 5 |
| Y | JP 10-160914 A  (Dainippon Printing Co., Ltd.),<br>19 June, 1998 (19.06.98),<br>Claims; pages 2 to 3, Par. No. [0012]; page 3,<br>Par. Nos. [0015] to [0016]<br>(Family: none) | 11,12 |
| A | JP 08-020604 A  (Kanebo NSC Kabushiki Kaisha),<br>23 January, 1996 (23.01.96),<br>Claims; page 2, Par. Nos. [0002] to [0004]<br>& EP 695769 A1<br>Page 2, lines 11 to 29<br>& CA 2153026 A | 1-12 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7232131 A
- JP 6300905 A

- JP 62127336 A